# EUROPEAN PATENT APPLICATION

(11) **EP 2 977 552 A1**
(43) Date of publication of application: **27.01.2016**
(21) Application number: 15177669.7
(22) Date of filing: 21.07.2015
(51) Int. Cl.: F01D 5/14, F01D 5/28

(54) **HOLLOW FAN BLADE FOR GAS TURBINE ENGINE INCLUDING SAME**

(30) Priority: 22.07.2014 US 201462027647 P
(71) Applicant: United Technologies Corporation, Hartford, CT 06101 (US)
(72) Inventor: WHITEHURST, Sean A., South Windsor, CT Connecticut 06074 (US); McCOMB, Patrick J., Naugatuck, CT Connecticut 06770 (US)
(74) Representative: Leckey, David Herbert

(57) **Abstract**

A blade (130) includes a hollow metal airfoil (132) having an opening to an internal cavity (154) in a first major surface (144). A metal cover (150) is adhesively bonded to the airfoil (132) around the opening. The cover (150) encloses the cavity (154) and provides a continuous first major surface. The cavity (154) is divided into at least first and second subcavities. A different filler material (158) is disposed within the first and second subcavities.

## Description

### TECHNICAL FIELD OF THE DISCLOSURE

The present disclosure relates generally to a gas turbine engine, and more specifically to a hollow fan blade for a gas turbine engine.

### BACKGROUND OF THE DISCLOSURE

A gas turbine engine, such as a turbofan engine for an aircraft, includes a fan section, a compression section, a combustion section and a turbine section. An axis of the engine is centrally disposed within the engine and extends longitudinally through the sections. The primary flow path for working medium gases extends axially through the sections of the engine. A secondary flow path for working medium gases extends parallel to and radially outward of the primary flow path.

The fan section includes a rotor assembly and a stator assembly. The rotor assembly of the fan includes a rotor disc and plurality of radially extending fan blades. The fan blades extend through the flow path and interact with the working medium gases and transfer energy between the fan blades and working medium gases. The stator assembly includes a fan case, which circumscribes the rotor assembly in close proximity to the tips of the fan blades.

During operation, the fan draws the working medium gases, more particularly air, into the engine. The fan raises the pressure of the air drawn along the secondary flow path, thus producing useful thrust. The air drawn along the primary flow path into the compressor section is compressed. The compressed air is channeled to the combustion section where fuel is added to the compressed air and the air/fuel mixture is burned. The products of combustion are discharged to the turbine section. The turbine section extracts work from these products to power the fan and compressed air. Any energy from the products of combustion not needed to drive the fan and compressor contributes to useful thrust.

### SUMMARY OF THE DISCLOSURE

In one embodiment, a blade is disclosed, comprising: a root; and an airfoil connected to the root and formed from a first metallic material, the airfoil comprising: first and second major surfaces; an internal cavity comprising at least one rib dividing the internal cavity into at least first and second subcavities; a first filler material disposed within the first subcavity; and a second filler material disposed within the second subcavity, wherein the first filler material is different than the second filler material.

In an embodiment of the above, the blade further comprises: an opening in the first major surface; and a cover covering the opening.

In a further embodiment of any of the above, the blade further comprises a socket around the opening, wherein the cover is received in the socket.

In a further embodiment of any of the above, the blade further comprises an adhesive bond between the cover and the socket

In a further embodiment of any of the above, the first filler material and the second filler material each comprise a material selected from the group consisting of: a plastic, a composite, a non-metallic foam, a solid metal, a metallic foam, and a gas.

In a further embodiment of any of the above, the second filler material comprises a material selected from the group consisting of: a plastic, a composite, a non-metallic foam, a solid metal, a metallic foam, and a gas.

In a further embodiment of any of the above, the metallic foam is selected from the group consisting of: 6XXX-series aluminum alloy, and 7XXX-series aluminum alloy.

In a further embodiment of any of the above, the blade further comprises an adhesive bond between the cover and the at least one rib.

In a further embodiment of any of the above, the at least one rib extends between the cover and the second major surface.

In a further embodiment of any of the above, the blade further comprises an adhesive bond between the cover and at least one of the first and second filler material disposed within the cavity.

In a further embodiment of any of the above, the blade further comprises a sheath formed from a second metallic material and covering a portion of the airfoil.

In a further embodiment of any of the above, the first metallic material is a 7XXX-series aluminum alloy.

In a further embodiment of any of the above, the second metallic material is a material selected from the group consisting of: titanium, and nickel alloy.

In a further embodiment of any of the above, the blade comprises a fan blade of a gas turbine engine.

In a further embodiment of any of the above, the first filler material comprises a first density, the second filler material comprises a second density, and the first density is different than the second density.

In another embodiment, a gas turbine engine is disclosed, comprising: a fan section, a compressor section, a combustor section and a turbine section in serial flow communication; at least one of the fan section, the compressor section and the turbine section including a blade comprising: a root; and an airfoil connected to the root and formed from a first metallic material, the airfoil comprising: first and second major surfaces; an internal cavity comprising at least one rib dividing the internal cavity into at least first and second subcavities; a first filler material disposed within the first subcavity; a second filler material disposed within the second subcavity, wherein the first filler material is different than the second filler material.

In a further embodiment of the above, the gas turbine engine further comprises: an opening in the first major surface; and a cover covering the opening.

In a further embodiment of any of the above, the first filler material and the second filler material each comprise a material selected from the group consisting of: a plastic, a composite, a non-metallic foam, a solid metal, a metallic foam, and a gas.

In a further embodiment of any of the above, the metallic foam is selected from the group consisting of: 6XXX-series aluminum alloy, and 7XXX-series aluminum alloy.

In a further embodiment of any of the above, the first filler material comprises a first density, the second filler material comprises a second density, and the first density is different than the second density.

Other embodiments are also disclosed.

### BRIEF DESCRIPTION OF THE DRAWINGS

The embodiments and other features, advantages and disclosures contained herein, and the manner of attaining them, will become apparent and the present disclosure will be better understood by reference to the following description of various exemplary embodiments of the present disclosure taken in conjunction with the accompanying drawings, wherein:
FIG. 1 is a schematic partial cross-sectional view of a gas turbine engine in an embodiment.
FIG. 2A is a side view of a hollow blade used in the engine of FIG. 1.
FIG. 2B is a cross-section taken along line 2B-2B in FIG. 2A.
FIG. 2C shows a magnified view of a portion of FIG. 2B.
FIG. 3 shows the airfoil of FIG. 2A including a cavity, a socket, ribs, and filler material.

### DETAILED DESCRIPTION OF THE DISCLOSED EMBODIMENTS

For the purposes of promoting an understanding of the principles of the invention, reference will now be made to certain embodiments and specific language will be used to describe the same. It will nevertheless be understood that no limitation of the scope of the invention is thereby intended, and alterations and modifications in the illustrated device, and further applications of the principles of the invention as illustrated therein are herein contemplated as would normally occur to one skilled in the art to which the invention relates.

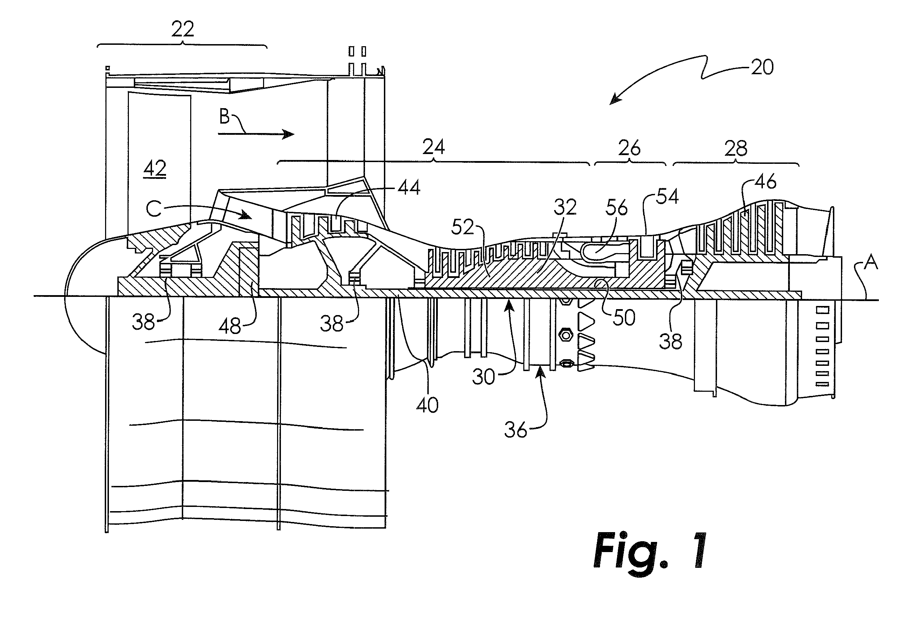

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,688 meters). The flight condition of 0.8 Mach and 35,000 ft (10,688 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 m/sec).

In a turbofan engine, lighter components generally lead to more efficient performance. If less energy is expended moving internal engine parts, more energy is available for useful work. At the same time, the components themselves must be strong enough to withstand forces typical for the operating environment and performance envelope. Safety considerations based on the frequency and/or severity of possible failure will often dictate that the engine components also be able to withstand certain atypical, yet foreseeable events as well. Because stronger components are often heavier and/or more expensive, a balance must be struck between efficiency, safety, and cost.

Few locations in an aircraft are more representative of efforts to optimize the balance between efficiency, safety, and cost than engine 20. In order to reduce weight, the fan blades in some gas turbine engines are hollow. Hollow blades may be formed using a variety of techniques. For example, hollow blades may be formed by diffusion bonding two machined plates or two forged halves together. Hollow blades may also be formed by bonding a metallic leading edge, trailing edge and tip portion to a composite airfoil. Other techniques may be used to form hollow blades, such as adhesive bonding by using an epoxy, a polyurethane-based adhesive or some other type of adhesive. In some designs, cavities within the hollow blades are filled with a filler material to increase the area over which the blade components may be bonded. The filler may have a damping quality. The following figures depict hollow blades with a bonded cavity cover adapted for use in a turbofan engine, such as engine 20 of FIG. 1, by way of illustration only. The filler material concepts disclosed herein may be used with any hollow blade, regardless of its configuration and how it is formed.

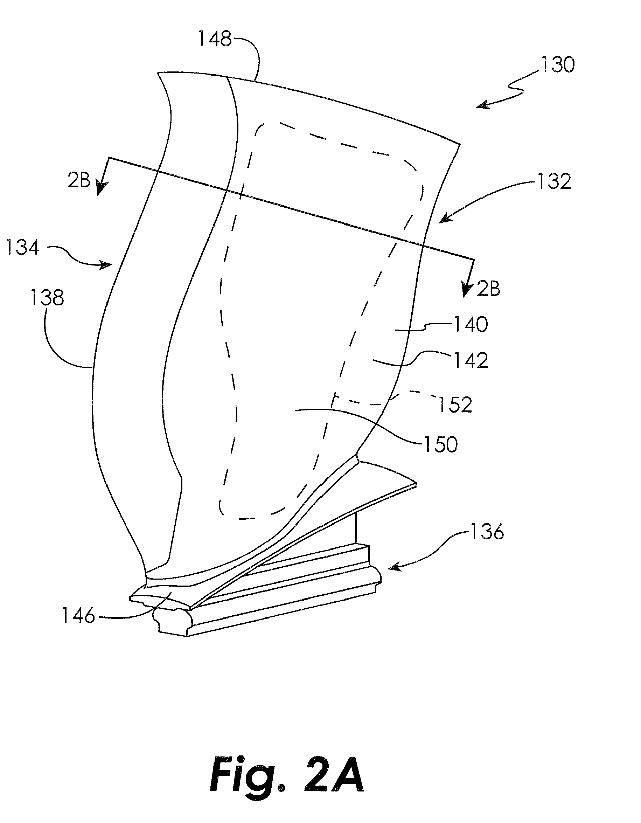

Exemplary hollow blade 130 is shown in FIG. 2A comprising airfoil 132, sheath 134, and root 136. Blade 130 includes leading edge 138, trailing edge 140, suction surface 142, pressure surface 144 (not visible in FIG. 2A), platform 146, tip edge 148, cavity cover 150, and socket 152. Airfoil 132 is a hollow aerodynamic structure described in further detail below. Pressure surface 144 is a major surface opposite major suction surface 142. In this example, sheath 134 covers a portion of suction surface 142 and a portion of pressure surface 144, proximate leading edge 138. Some embodiments do not include sheath 134.

Root 136 links blade 130 at platform 146 to a disk or rotor (not shown) in fan section 22. The disk is connected, either directly or through a gear train, to low-pressure shaft 40 powered by low-pressure turbine section 28 as shown in FIG. 1. Here root 136 is shown as a "dovetail" root; however such an arrangement is not required for the present invention. Alternatively, blade 130 can have a different configuration of root 136, or root 136 can be incorporated with the disk in what is known as an integral rotor blade configuration.

Leading edge 138 and trailing edge 140 extend generally spanwise in a curved manner from platform 146 to tip edge 148. Air flows chordwise from leading edge 138 over major surfaces suction surface 142 and pressure surface 144, and converges at trailing edge 140.

Platform 146 provides an inner flow path to direct incoming air over suction surface 142 and pressure surface 144, and away from the rotor (not shown) proximate root 136. In FIG. 2A and several subsequent figures, platform 146 is shown to be integrated with airfoil section 132. Alternatively, platform 146 can be fabricated and attached separately to airfoil section 132 or attached directly to the rotor.

Blade 130 also includes cavity cover 150 and socket 152 on suction surface 142. Socket 152 is represented by the dashed line on suction surface 142 but is hidden from view by cover 150. Cavity cover 150 engages with socket 152, covering an opening and completing a continuous first surface of blade 130. Here, the first surface is suction surface 142. Socket 152 is disposed around an opening in suction surface 142 leading to cavity 154 (not shown in FIG. 2A), located within the interior volume of blade 130. Cover 150, socket 152, and cavity 154 are described in more detail below.

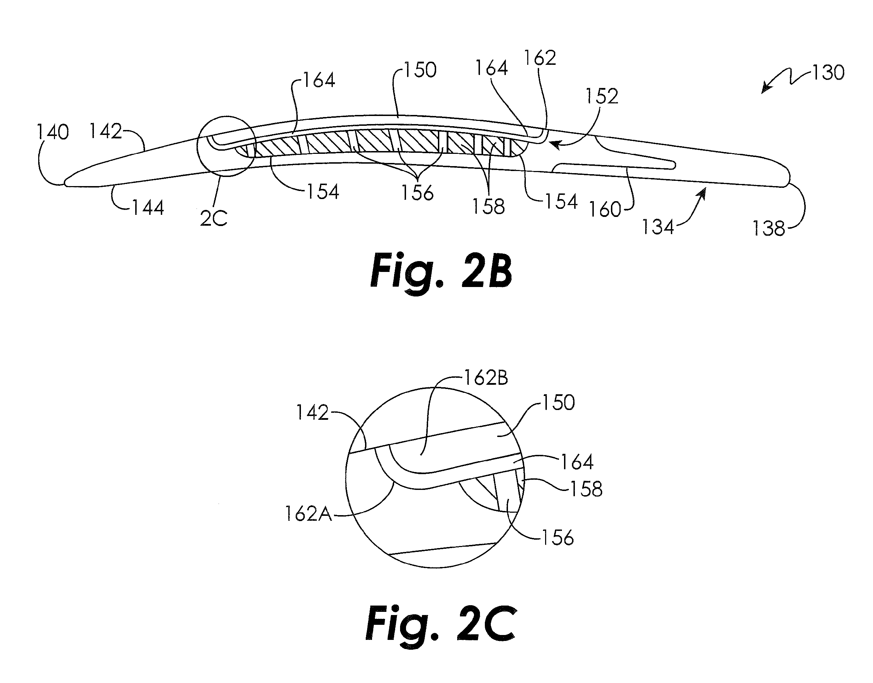

Additional elements of blade 130 are shown in the cross-section view of FIG. 2B, taken along line 2B-2B of FIG. 2A. In addition to the elements of blade 130 visible in FIG. 2A, FIG. 2B also shows pressure surface 144, cavity 154, internal support ribs 156, filler material 158, sheath attachment surface 160, lap sections 162A and 162B, and adhesive 164. For ease of illustration and description of these other elements of blade 130, FIG. 2B depicts blade 130 viewed toward platform 146 from tip edge 148 and is arranged to show suction surface 142 on the top of the figure. As such, sheath 134 is now seen on the right side of the figure with cavity cover 150 engaged in socket 152. A magnified view of a portion of blade 130 with cover 150 adhesively bonded in place is seen in FIG. 2C. In other embodiments, cover 150 may be attached to blade 130 by other means, such as by welding or by mechanical fasteners, to name just two non-limiting examples.

Cavity 154 is located between suction surface 142 and pressure surface 144. Support ribs 156 are disposed within cavity 154. Filler material 158 is disposed within cavity 154, typically between ribs 156. Sheath attachment surface 160 is shown here to be proximate leading edge 138 between sheath 134 and airfoil 132. Lap sections 162A and 162B define a lap joint for cover 150. Adhesive 164 bonds cover 150 to airfoil 132. FIG. 2C includes these same elements in a magnified view.

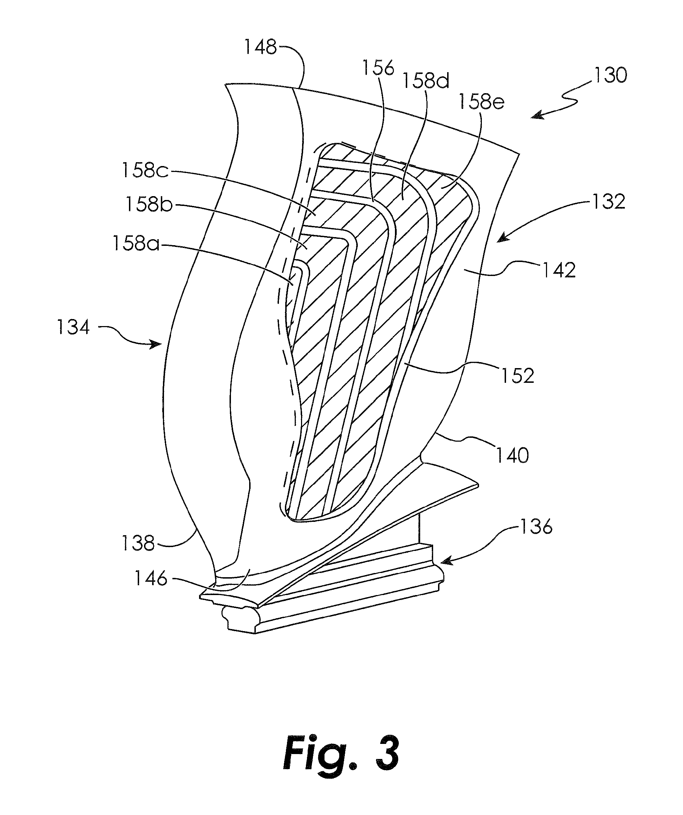

Cavity 154 is a hollow section of blade 130 located within airfoil 132 between the two major surfaces, suction surface 142 and pressure surface 144. Specific dimensions and alignment of cavity 154 within blade 30 may vary with different blade 130 designs, with one non-limiting example illustrated with respect to FIG. 3. Regardless of size or alignment, one method of forming cavity 154, is to remove material (e.g., by machining) from a major surface of airfoil portion 132, like suction surface 142.

An opening provides access to cavity 154 and occupies a given surface area on suction surface 142. Around the perimeter of this opening, socket 152 is formed, again, for example, by machining. Socket 152 engages and structurally supports cover 150, so that cavity 154 is enclosed on all sides. Socket 152 can be defined by a variety of surfaces extending around the opening, such as lap section 162A.

Lap section 162A is the bottom half of a lap joint, with the top half, lap section 162B, being disposed on the inner surface of cover 150 around its perimeter. Lap section 162A extends around the perimeter of cavity 154 and structurally supports lap section 162B of cover 150. Alternatively, socket 152 is one or more lips, ridges, notches, or other engagement surfaces.

As seen in FIG. 2B, cavity cover 150 is bonded via adhesive 164 to airfoil 132 at socket 152. When adhesive 164 is placed and cured between sets of ridges 162, cover 150 permanently covers the opening surrounded by socket 152, and encloses cavity 154 and any elements disposed therein, such as ribs 156 and filler 158.

Loads of varying magnitude and direction are distributed throughout blade 130 during operation of engine 20, particularly over pressure surface 142. Small foreign object impacts occur on this surface as well as continuous vibratory stresses from high pressure airflow. Cover 150 can withstand many of these forces by transmitting them through socket 152 into the body of blade 130. However, in the event of a bird strike proximate suction surface 142, cover 150 and socket 152 experience a great amount of shear.

When a relatively large foreign object strikes hollow blade 130 proximate cover 150, forces are transmitted through socket 152 and adhesive 164. In addition to foreign objects, blade 130 experiences significant vibratory stresses from the passing air and from operation of the surrounding engine components. If the total bonding area on socket 152 is not large enough to sufficiently spread and withstand these lateral forces and vibratory stresses, the bond may fail. Increasing the relative width of socket 152 is one option to increase bonding area. Another option is to increase and take advantage of the amount of available bonding area within cavity 154 by including ribs 156 and filler 158.

If the area of socket 152 is relatively small, the correspondingly small amount of adhesive 164 can be insufficient and fail under the shear caused by the force of the foreign object. As shown in FIGS. 2B-2C, in some embodiments cavity cover 150 may also be bonded to ribs 156 and filler material 158, located within cavity 154. This bond helps socket 152 resist shear forces by increasing the bonding area of cover 150.

By adhesively bonding cover 150 to ribs 156 in addition to socket 152, the risk of failure due to a foreign object strike or operational fatigue proximate the bonding area is reduced. Ribs 156 are formed on the cavity side of pressure surface 144 and extend through cavity 154 ending approximately at the cavity side of cover 150. Since cover 150 forms a substantial portion of suction surface 142, the cavity side of cover 150 rests on ribs 156 in addition to socket 152, thus providing additional bonding surfaces for cover 150.

Ribs 156 are shown for illustration and ease of description in FIG. 2B as substantially parallel and equidistant structures, but can take any form throughout cavity 154. Different types of hollow blades typically contain a plurality of ribs 156 within cavity 154. Ribs 156 reinforce suction surface 142, including cavity cover 150, as well as pressure surface 144 through cavity 154. Reinforcement allows these surfaces to be thinner, thus saving weight. The particular design of ribs 156 will be dependent on several factors but will typically be directed toward balancing weight reduction and raw material savings with processing costs. Ribs 156 are described in more detail with respect to FIG. 3.

In addition to ribs 156, adhesive 164 can also bond cover 150 to filler material 158. Filler material 158 offers an additional or alternative way of creating supplementary bonding area for cover 150. Filler material 158 is disposed within cavity 154 and at least partially fills one or more gaps between adjacent ribs 156. In this case, cover 150 is adhesively bonded to at least a part of filler material 158. Filler material 158 can provide additional bonding surface when it extends to a depth (in the blade thickness direction) that leaves filler material 158 substantially flush with the suction side of ribs 156 (approximately at the cavity side of cover 150). In FIG. 2B, cover 158 is bonded to the entire exposed surface of filler material 158.

Filler material 158 may be a plastic, a composite, a non-metallic foam, a metallic foam or any other material to provide structural support to suction surface 142 and/or pressure surface 144. Filler material 158 in some embodiments also provides force damping as described below. One example filler material 158 is a metallic foam comprising aluminum. Another example filler material 158 is a metallic foam comprising a 6XXX- or 7XXX-series aluminum alloy. Other types of filler material 158 may also be used. Some of these filler materials 158 may have a damping benefit.

Filler material 158 allows for a greater quantity of adhesive to be used overall in bonding cover 50 because of the additional surface area. Alternatively, the same quantity or volume of adhesive can be spread over the larger area. Because of filler material 158, bonding of cover 150 can utilize substantially the entire surface area of the cavity side of cover 150, including any ridges 162. This larger bonding area spreads out the area over which force is transmitted between cover 150 and the remainder of blade 130, reducing the risk that the bond will fail. In alternative embodiments, the adhesive bond of cover 150 to ribs 156 and/or filler material 158 is sufficient to reduce or eliminate ridges 162 defining socket 152 as well as any complementary ridges 162 on cover 150.

Adhesive 164 is one that is suitable for metal-to-metal bonding in aviation applications. Several epoxy- and urethane-based adhesives are commercially available and are suitable to bond cover 150 and airfoil 132. In an example of a film-based adhesive, the film is applied along socket 152. Film adhesive 164 is additionally or alternatively applied on the corresponding bonding surface, such as on complementary lap section 162B on the cavity facing side of cover 150.

Examples of suitable epoxy-based adhesives 164 include type EA9628 adhesive available from Henkel Corporation's Hysol Division, Bay Point, Calif. and type AF163K adhesive available from 3M Adhesives, Coatings & Sealers Division, St. Paul, Minn. In the event that filler material 158 is not present in sufficient quantities, or its properties are inadequate to provide desired damping in blade 130 between cover 150 and airfoil 132, an adhesive with additional damping properties can also be utilized.

Adhesive 164 can also be selected to aid in force damping of operational stresses and foreign object strikes while also providing sufficient bonding strength of cover 150. While polyurethane-based adhesives generally provide less bonding strength than epoxy-based adhesives, polyurethane adhesives provide both damping and sufficient bonding strength for hollow blade 130. One example of a suitable polyurethane adhesive 164 is EC-3532B adhesive available from 3M Adhesives, Coatings & Sealers Division, St. Paul, Minn.

In some embodiments, the additional bonding strength and reinforcement provided by filler 158 achieves additional weight reduction by replacing some of the solid metal otherwise needed in blade 130. By providing additional reinforcement and bonding area in cavity 154, filler can reduce or eliminate socket 152. Socket 152 can be made to be thinner or be made to protrude into the cavity to a lesser degree. This is possible because various stresses on adhesive 64 around socket 52 are redirected primarily over filler 58 and ribs 56, limiting shear and fatigue.

FIG. 3 depicts blade 130 without the cover 150 in place. Visible in FIG. 3 are socket 152, cavity 154, support ribs 156, regions of optional filler material 158a - 158e, sheath attachment surface 160, and lap section 162A. Socket 152 is disposed around an opening providing access to cavity 154, and is located on a first surface, such as suction surface 142. While five regions of optional filler material 158a- 158e are shown for illustrative purposes only, other embodiments may comprise greater than or less than five regions. As described below, the regions of optional filler material 158a - 158e may comprise more than one type of filler material 158 and some regions may have no filler material (i.e. contain a gas).

Support ribs 156 are formed on an internal surface of airfoil 132 defining cavity 154. In certain embodiments, several support ribs 156 extend in multiple directions across the thickness of blade 130, such as is seen here. Cavity 154 appears here as a plurality of subcavities between adjacent ribs 156. In some embodiments, such as is seen in FIG. 3, ribs 156 extend between more than one edge of cavity 154, causing cavity 154 to be divided into a plurality of smaller cavities. However, as used in this specification, cavity 154 can refer to the overall hollow volume as well as to the plurality of subcavities. Ribs 156 can be formed out of airfoil portion 132, for example, by machining during or after forming cavity 154. Ribs 156 increase structural support of blade 130, including suction surface 142 and pressure surface 144.

As described above, ribs 156 extend through cavity 154 supporting both suction surface 142 and pressure surface 144. Ribs 156 can be arranged in a variety of orientations. Like sheath 134, chordwise ribs between leading edge 138 and trailing edge 140 reinforce blade 130 in the event of a foreign object strike. Longitudinal ribs 156 between platform 146 and tip edge 148 provide stiffness for centrifugal loading. Curved ribs 156 increase the inertia of blade 130 in a given direction to balance and redirect the centrifugal and axial forces experienced along blade 130. Filler material 158 also provides support for major surfaces 142 and 144.

Between adjacent ribs 156 are regions of optional filler material 158a- 158e, as noted above. Various embodiments include the use of different filler materials 158 for some or all of the regions of optional filler material 158a - 158e. For example, the filler material 158 disposed within various ones of the regions of optional filler material 158a - 158e may comprise different densities to achieve different levels of bond strength in different regions of the blade 130, different levels of strength in different regions of the blade 130, different levels of stiffness in different regions of the blade 130, and different weights in different regions of the blade 130, to name just a few non-limiting examples. Densities can range from high (solid metal), to foams, to zero density (i.e. no filler material 158 other than a gas such as air to name one non-limiting example). In some embodiments, more than one type of filler material 158 may be used within a single one of the regions of optional filler material 158a - 158e. For example, region 158d may have a first filler material 158 of relatively high density proximate platform 146 and a second filler material 158 of relatively low density proximate tip edge 148.

For example, regions 158a - 158e closer to leading edge 138 may be filled with filler material 158 having a relatively high density to provide increased axial load resistance in some embodiments. This is done to provide additional high density material proximate leading edge 138, thereby increasing the strength near the leading edge 138, due to the greater frequency of foreign object strikes in this area compared to trailing edge 140.

In addition to axial load resistance, in some embodiments the filler material 158 can also be optimized to reinforce blade 130 against anticipated centrifugal loads proximate platform 146. The larger solid region of blade 130 proximate platform 146 reinforces the connection to root 136 and the central disk (not shown). Providing relatively high density filler material 158 proximate platform 146 will help to support these centrifugal forces.

In other embodiments, the density of filler material 158 may be relatively low proximate tip edge 148 to reduce centrifugal loads at platform 146. Reducing weight at the outer reaches of blade 130 translates into lower stress at its root end 136.

In other embodiments, the center of gravity of the blade 130 may be adjusted by the use of filler materials of different densities in various ones of the regions of optional filler material 158a - 158e. The ability to tune the location of the center of gravity of the blade 130 may provide additional operational performance from the blade 130.

The description above includes several example embodiments. However, several variations are possible. As described above, cavity 154 is formed out of an opening in suction surface 142. This is in part because the negative pressure tends to hold cover 150 in place over cavity 154 against a combination of one or more of socket 152, ribs 156, and filler material 158. The negative pressure on suction surface 142 generally maintains adhesive 164 under a degree of compression during operation, which reduces the likelihood that bonding of cover 150 weaken or fail.

However, cavity 154 is not limited to suction surfaces 142. Other design or efficiency considerations, such as these discussed earlier, can indicate that placement of socket 152 and cavity cover 150 on pressure surface 144 is more beneficial. In that case, the disclosed embodiments can easily be adapted to integrate socket 152 of cover 150 with the opposing surface. In some embodiments, the blade 130 may include more than one cover 150.

It should also be noted that, while titanium is the benchmark material for turbine airfoils, this disclosure is not at all limited to hollow titanium or titanium alloys, nor is it necessarily limited to airfoils for turbofan engines. Several examples include airfoil 132 as being formed from an aluminum alloy, such as one in the 7XXX series. Other lightweight alloys are also appropriate for hollow blade 130, provided that the finished engine 20 meets the appropriate regulations for its location and type of service. Any hollow fan, compressor, or turbine blade can be created with any suitable material, including composite materials.

While the invention has been illustrated and described in detail in the drawings and foregoing description, the same is to be considered as illustrative and not restrictive in character, it being understood that only certain embodiments have been shown and described and that all changes and modifications that come within the scope of the invention are desired to be protected.

## Claims

1. A blade (130) comprising:
a root (136); and
an airfoil (132) connected to the root (136) and formed from a first metallic material, the airfoil (132) comprising:
first and second major surfaces (142,144);
an internal cavity (154) comprising at least one rib (156) dividing the internal cavity (154) into at least first and second subcavities;
a first filler material (158a) disposed within the first subcavity; and
a second filler material (158b) disposed within the second subcavity, wherein the first filler material (158a) is different than the second filler material (158b).

2. The blade of claim 1, further comprising:
an opening in the first major surface (144); and
a cover (150) covering the opening.

3. The blade of claim 2, further comprising a socket (152) around the opening, wherein the cover (150) is received in the socket (152).

4. The blade of claim 3, further comprising an adhesive bond between the cover (150) and the socket (152).

5. The blade of claim 2, 3 or 4, further comprising an adhesive bond between the cover (150) and the at least one rib (156).

6. The blade of any of claims 2 to 5, wherein the at least one rib extends between the cover (150) and the second major surface (142).

7. The blade of any of claims 2 to 6, further comprising an adhesive bond between the cover (150) and at least one of the first and second filler material disposed within the cavity (154).

8. The blade of any preceding claim, wherein the first filler material (158a) and the second filler material (158b) each comprise a material selected from the group consisting of: a plastic, a composite, a non-metallic foam, a solid metal, a metallic foam, and a gas.

9. The blade of claim 8, wherein the metallic foam is selected from the group consisting of: 6XXX-series aluminum alloy, and 7XXX-series aluminum alloy.

10. The blade of any preceding claim, wherein the second filler material (158b) comprises a material selected from the group consisting of: a plastic, a composite, a non-metallic foam, a solid metal, a metallic foam, and a gas.

11. The blade of any preceding claim, further comprising a sheath (134) formed from a second metallic material and covering a portion of the airfoil (132), wherein, optionally, the second metallic material is a material selected from the group consisting of: titanium, and nickel alloy.

12. The blade of any preceding claim, wherein the first metallic material is a 7XXX-series aluminum alloy.

13. The blade of any preceding claim, wherein the blade (130) comprises a fan blade of a gas turbine engine (20).

14. The blade of any preceding claim, wherein the first filler material (158a) comprises a first density, the second filler material (158b) comprises a second density, and the first density is different than the second density.

15. A gas turbine engine (20) comprising:
a fan section (22), a compressor section (24), a combustor section (26) and a turbine section (28) in serial flow communication;
at least one of the fan section (22), the compressor section (24) and the turbine section (28) including a blade (130) as claimed in any preceding claim.
